(19) Europäisches Patentamt
European Patent Office
Office européen des brevets

(11) **EP 3 538 755 B1**

(12) **FASCICULE DE BREVET EUROPEEN**

(45) Date de publication et mention de la délivrance du brevet:
**09.12.2020 Bulletin 2020/50**

(21) Numéro de dépôt: **17787933.5**

(22) Date de dépôt: **26.10.2017**

(51) Int Cl.:
*F03B 13/16* $^{(2006.01)}$    *F03B 15/00* $^{(2006.01)}$

(86) Numéro de dépôt international:
**PCT/EP2017/077410**

(87) Numéro de publication internationale:
**WO 2018/086894 (17.05.2018 Gazette 2018/20)**

(54) **PROCEDE DE COMMANDE D'UN SYSTEME HOULOMOTEUR AU MOYEN D'UNE COMMANDE OBTENUE PAR MINIMISATION D'UNE FONCTION OBJECTIF PONDEREE ET DISCRETISEE PAR LA METHODE DES TRAPEZES**

VERFAHREN ZUR STEUERUNG EINES WELLENLEISTUNGSSYSTEMS MITTELS EINER STEUERUNG, DIE DURCH MINIMIERUNG EINER DURCH DIE TRAPEZREGEL GEWICHTETEN UND DISKRETISIERTEN OBJEKTIVEN FUNKTION MINIMIERT IST

METHOD FOR CONTROLLING A WAVE POWER SYSTEM BY MEANS OF A CONTROL OBTAINED BY MINIMISING AN OBJECTIVE FUNCTION WEIGHTED AND DISCRETISED BY THE TRAPEZOID RULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.11.2016 FR 1660872**

(43) Date de publication de la demande:
**18.09.2019 Bulletin 2019/38**

(73) Titulaire: **IFP Energies nouvelles**
**92852 Rueil-Malmaison (FR)**

(72) Inventeurs:
• **TONA, Paolino**
**69007 Lyon (FR)**
• **NGUYEN, Hoai-Nam**
**69008 Lyon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**FR-A1- 2 973 448        FR-A1- 3 019 235**
**US-A1- 2016 237 980**

• **Giorgio Bacelli ET AL: "A control system for a self-reacting point absorber wave energy converter subject to constraints", , 1 août 2011 (2011-08-01), XP055153399, DOI: 10.3182/20110828-6-IT-1002.03694 Extrait de l'Internet: URL:http://eprints.nuim.ie/3555 cité dans la demande**

## Description

L'invention concerne le domaine des dispositifs pour convertir l'énergie des vagues en énergie électrique ou hydraulique.

Les ressources énergétiques renouvelables connaissent un fort intérêt depuis quelques années. Propres, gratuites et inépuisables, autant d'atouts majeurs dans un monde rattrapé par la diminution inexorable des ressources fossiles disponibles et prenant conscience de la nécessité de préserver la planète. Parmi ces ressources, l'énergie houlomotrice, source relativement méconnue au milieu de celles largement médiatisées comme l'éolien ou le solaire, contribue à la diversification indispensable de l'exploitation des énergies renouvelables. Les dispositifs, couramment appelés appareils "houlomoteurs", sont particulièrement intéressants, car ils permettent de produire de l'électricité à partir de cette source d'énergie renouvelable (l'énergie potentielle et cinétique des vagues), sans émission de gaz à effet de serre. Ils sont particulièrement bien adaptés pour fournir de l'électricité à des sites insulaires isolés.

Par exemple, les demandes de brevet FR 2876751, FR 2973448 et WO 2009/081042 décrivent des appareils pour capter l'énergie produite par le flot marin. Ces dispositifs sont composés d'un support flottant sur lequel est disposé un pendule monté mobile par rapport au support flottant. Le mouvement relatif du pendule par rapport au support flottant est utilisé pour produire de l'énergie électrique au moyen d'une machine de conversion de l'énergie (par exemple une machine électrique). La machine de conversion fonctionne en tant que générateur et en tant que moteur. En effet, pour fournir un couple ou une force qui entraîne le mobile, on fournit une puissance à la machine de conversion afin de le mettre en résonance avec les vagues (mode moteur). Par contre, pour produire un couple ou force qui résiste au mouvement du mobile, on récupère une puissance via la machine de conversion (mode générateur).

Le mouvement des moyens mobiles est donc contrôlé par la machine de conversion de l'énergie pour favoriser la récupération d'énergie. Afin d'optimiser l'énergie électrique récupérée par les systèmes houlomoteurs, différents procédés de commande de la machine de conversion ont été envisagés. Certains de ces procédés ne sont pas optimaux car la prédiction de la houle n'est pas considérée. De plus, ces procédés ne prennent pas en compte les pertes énergétiques lors de la conversion de l'énergie dans le système houlomoteur. Par exemple, la demande de brevet FR 2973448 (WO 2012/131186) décrit un tel procédé.

Par ailleurs, d'autres procédés combinent la commande prédictive avec un algorithme qui prédit la houle. Toutefois, ces algorithmes ne permettent pas de prendre en compte les pertes énergétiques lors de la conversion de l'énergie dans le système houlomoteur, ce qui ne permet pas de réaliser une commande optimale qui maximise l'énergie récupérée. Par exemple, le document suivant décrit un tel procédé : Giorgio Bacelli, John Ringwood, and Jean-Christophe Gilloteaux. "A control system for a self-reacting point absorber wave energy converter subject to constraints". In: Proceedings of 18th IFAC World Congress. International Fédération of Automatic Control (IFAC). 2011, pp. 11387-11392

L'approche de commande prédictive décrite dans la demande de brevet FR 3019235 (WO 2015/150102) est la première qui prend en compte explicitement le rendement de conversion de l'énergie dans la fonction objectif, de manière à garantir la maximisation de la puissance électrique produite par le système houlomoteur. Sous réserve de disposer d'une prédiction de la houle à court terme suffisamment précise, cette formulation répond parfaitement aux attentes en termes de performances, car on peut montrer que l'énergie récupérée sur plusieurs états de mer est toujours très proche du maximum atteignable. En revanche, des calculs complexes et longs sont nécessaires pour obtenir la solution optimale, ce qui peut rendre l'implémentation en temps réel sur le système houlomoteur difficile voire impossible, selon la puissance du calculateur de commande disponible. La complexité de calcul est due à la non convexité de la fonction objectif quadratique, qui couplée au grand nombre d'inconnues, nécessite l'utilisation d'un algorithme d'optimisation non-linéaire à grand échelle.

Pour pallier ces inconvénients, la présente invention propose d'améliorer le fonctionnement d'un système houlomoteur par un procédé de commande prédictive de la machine de conversion qui maximise l'énergie générée en prenant en considération le rendement des conversions énergétiques et une prédiction de la houle. De plus, le procédé selon l'invention détermine la commande optimale par minimisation d'une fonction objectif pondérée et discrétisée par la méthode des trapèzes. Ainsi, le procédé de commande selon l'invention permet de déterminer la commande qui maximise la puissance moyenne récupérée avec des temps de calculs réduits, car l'optimisation de la fonction objectif discrétisée et pondérée aboutit à un problème de programmation quadratique strictement convexe, qu'il est possible de résoudre avec des algorithmes très efficaces.

## Le procédé selon l'invention

L'invention concerne un procédé de commande d'un système houlomoteur qui convertit l'énergie de la houle en énergie électrique ou hydraulique, ledit système houlomoteur comportant au moins un moyen mobile qui coopère avec au moins une machine de conversion de l'énergie, et ledit moyen mobile effectuant un mouvement oscillatoire par rapport à ladite machine de conversion. Pour ce procédé, on réalise les étapes suivantes :

a) on construit un modèle dynamique dudit système houlomoteur qui relie la vitesse dudit moyen mobile à ladite force exercée par la houle sur ledit moyen mobile et à la force exercée par ladite machine de conversion sur ledit moyen mobile ;

b) on construit un modèle énergétique dudit système houlomoteur qui relie la puissance moyenne générée par ladite machine de conversion à la force exercée par ladite machine de conversion sur ledit moyen mobile, à la vitesse dudit moyen mobile, et au rendement dudit système houlomoteur ;

c) on prédit la force exercée par les vagues sur ledit moyen mobile pour une période de temps prédéterminé ;

d) on détermine une valeur de commande de ladite force exercé par ladite machine de conversion sur ledit moyen mobile maximisant la puissance moyenne générée par ladite machine de conversion, en mettant en œuvre les étapes suivantes :

    i) on détermine une fonction objectif représentative de la puissance générée par ladite machine de conversion au moyen de ladite prédiction de la force exercée par la houle sur ledit moyen mobile, dudit modèle dynamique et dudit modèle énergétique ;

    ii) on discrétise ladite fonction objectif par la méthode des trapèzes ;

    iii) on pondère, dans ladite fonction objectif discrétisée, les valeurs futures de la commande par des coefficients de pondération prédéterminés ;

    iv) on déduit ladite valeur de commande de ladite force exercé par ladite machine de conversion sur ledit moyen mobile par minimisation de ladite fonction objectif discrétisée et pondérée ; et

e) on commande ladite machine de conversion au moyen de ladite valeur de commande.

Selon un mode de réalisation de l'invention, ladite fonction objectif J discrétisée et pondérée s'écrit :

$$J = \sum_{j=0}^{N_p-2} q_j u_a(k+j|k)(v(k+j|k) + v(k+j+1|k))$$

avec $q_j$ lesdits coefficients de pondération, $u_a$ la force exercée par ladite machine de conversion sur ledit moyen mobile, et v la vitesse dudit moyen mobile, et Np nombre de pas de temps discrets contenus dans l'horizon de prédiction.

Avantageusement, ladite fonction objectif J discrétisée et pondérée s'écrit sous une forme matricielle du type:

$$J = \mathbf{u}_e^T \mathbf{H} \mathbf{u}_e + 2\mathbf{u}_e^T \mathbf{f} \begin{bmatrix} x(k|k) \\ \mathbf{w}_e \end{bmatrix}$$

avec $\mathbf{u_e}$ un vecteur de la force exercée par ladite machine de conversion sur ledit moyen mobile, x le vecteur d'état du modèle du système houlomoteur avec sa machine de conversion, $\mathbf{w_e}$ le vecteur des prédictions de la force de la houle, $\mathbf{H}$ la matrice de pondération sur le vecteur $\mathbf{u_e}$. , f la matrice de pondération sur l'état courant $x$ du modèle dynamique global du système houlomoteur et le vecteur des prédictions de la force de la houle $\mathbf{w_e}$.

De préférence, on remplace les valeurs propres négatives ou nulles de ladite matrice de pondération H par des valeurs propres positives prédéterminées.

Selon une mise en œuvre, on prédit la force exercée par la houle sur ledit moyen mobile par au moins une mesure ou une estimation de ladite force exercée par la houle sur ledit moyen mobile, notamment au moyen d'un ensemble de capteurs de pression disposés au niveau du moyen mobile ou de capteurs de force disposés entre ledit moyen mobile et la machine de conversion.

Conformément à une variante, ledit modèle dynamique dudit système houlomoteur s'écrit sous une forme :

$$\begin{cases} \dot{x}(t) = A_c x(t) + B_{cu} u(t) + B_{cw} w(t) \\ y(t) = C_c x(t) \end{cases}$$

avec x le vecteur d'état dudit système houlomoteur avec ladite machine de conversion, u la commande de ladite force exercée par ladite machine de conversion sur ledit moyen mobile, w la force d'excitation de la houle incidente sur ledit moyen mobile, et Ac, Bcu, Bcw, Cc des matrices qui multiplient l'état, et les entrées dudit modèle dynamique pour permettre le calcul de la variation dynamique de l'état et les sorties dudit modèle dynamique.

Selon une caractéristique, ledit modèle dynamique dudit système houlomoteur intègre une dynamique idéale de ladite machine de conversion, en considérant la commande de ladite machine de conversion quasi instantanée par rapport à la dynamique dudit système houlomoteur.

Conformément à une option de réalisation, ledit modèle énergétique s'écrit par une formule du type :

$$P_a = -\frac{1}{T}\int_{t=0}^{T} \eta u_a v \, dt$$

avec $P_a$ la puissance moyenne générée, t le temps, T une durée prédéterminée, $\eta$ le rendement de la conversion de l'énergie, u la force exercée par ladite machine de conversion sur ledit moyen mobile et v la vitesse dudit moyen mobile par rapport à ladite machine de conversion.

De préférence, ledit rendement $\eta$ est fonction de la force $u_a$ exercée par la machine de conversion sur ledit moyen mobile et de la vitesse v du moyen mobile par rapport à ladite machine de conversion.

De manière avantageuse, ledit rendement $\eta$ est calculé par une formule du type :

$$\eta(u_a v) = \begin{cases} \eta_p \text{ si } u_a v \geq 0 \\ \eta_n \text{ si } u_a v < 0 \end{cases}$$

avec $\eta_p$ le rendement moteur de ladite machine de conversion, $\eta_n$ le rendement générateur de ladite machine de conversion, avec $0 < \eta_p \leq 1$ et $\eta_n \geq 1$.

Conformément à un mode de réalisation, ledit procédé comprend une étape préalable d'optimisation desdits coefficients de pondération par un algorithme génétique, ou par optimisation par essaims particulaires, ou par la recherche par voisinage variable ou par la méthode de Nelder-Mead.

Selon une mise en œuvre, on réitère les étapes c), d) et e) pour une commande prédictive à horizon glissant.

De préférence, ladite machine de conversion de l'énergie est une machine électrique ou hydraulique.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé selon l'invention.
La figure 2 illustre le modèle dynamique selon un mode de réalisation de l'invention.
La figure 3 illustre un exemple de système houlomoteur.
La figure 4a illustre une discrétisation d'une fonction selon la méthode des rectangles.
La figure 4b illustre une discrétisation de la même fonction selon la méthode des trapèzes.
La figure 5 illustre, pour un premier exemple, une courbe de la puissance générée par un système houlomoteur obtenue par un procédé de commande selon l'art antérieur et par le procédé de commande selon un mode de réalisation de l'invention.
La figure 6 illustre, pour le premier exemple, une courbe de puissance instantanée par un système houlomoteur obtenue par un procédé de commande selon l'art antérieur, et par le procédé de commande selon un mode de réalisation de l'invention.
La figure 7 illustre, pour le premier exemple, une courbe de la commande pour un système houlomoteur obtenue par un procédé de commande selon l'art antérieur, et par le procédé de commande selon un mode de réalisation de l'invention.
La figure 8 illustre, pour le premier exemple, une courbe de la vitesse du moyen mobile d'un système houlomoteur obtenue par un procédé de commande selon l'art antérieur, et par le procédé de commande selon un mode de réalisation de l'invention.
La figure 9 illustre, pour le premier exemple, la densité spectrale de la houle.
La figure 10 illustre, pour un second exemple, une courbe de l'énergie générée par un système houlomoteur obtenue par un procédé de commande selon l'art antérieur et par le procédé de commande selon un mode de réalisation de l'invention.

## Description détaillée de l'invention

L'invention concerne un procédé de commande d'un système houlomoteur qui comprend au moins un moyen mobile (par exemple un flotteur) qui coopère avec au moins une machine de conversion de l'énergie (également appelée PTO de l'anglais « Power Take-Off »). Le moyen mobile effectue un mouvement oscillatoire par rapport à la machine de conversion, sous l'action des vagues (ou houle) et de la machine de conversion. La machine de conversion convertit l'énergie mécanique du mouvement du moyen mobile en énergie électrique. Dans ce but, la machine de conversion peut être une machine électrique ou une machine hydraulique. La machine de conversion peut être considérée comme l'actionneur par lequel le système de commande pilote le fonctionnement du système houlomoteur

Notations

Au cours de la description, les notations suivantes sont utilisées :

- $u_a$ : force exercée par la machine de conversion sur le moyen mobile, également notée $F_u$ et :

    ▪ $u$ valeur de la commande de force demandée à la machine de conversion sur le moyen mobile. par le système de commande du système houlomoteur (qui implémente le procédé de commande selon l'invention)

- w : force exercée par les vagues sur le moyen mobile (également notée $F_{ex}$).
- z : position du moyen mobile par rapport à son point d'équilibre.
- v : vitesse du moyen mobile, notée aussi $\dot{z}$
- $\ddot{z}$ : accélération du moyen mobile
- M : masse du moyen mobile.
- $F_{hyd}$: force de rappel hydrostatique.
- K : coefficient de raideur hydrostatique.
- $F_{rad}$ : force de radiation.
- Fr : réponse impulsionnelle de la force de radiation.
- $M_{\infty}$ : masse ajoutée à fréquence infiniment élevée,
- $x_a$ : vecteur d'état du modèle de la machine de conversion du système houlomoteur.
- $A_a$, $B_a$, $C_a$, $D_a$ : matrices de la représentation d'état du modèle linéaire de la machine de conversion du système houlomoteur qui est intégré dans le modèle dynamique global pour la commande.
- $x_r$ : état interne de la représentation d'état de la réponse impulsionnelle de la réponse impulsionnelle de la composante de la force de radiation due à la vitesse du flotteur.
- $A_r$, $B_r$, $C_r$, $D_r$ : matrices de la représentation d'état de la réponse impulsionnelle de la composante de la force de radiation due à la vitesse du flotteur.
- $x$ : vecteur d'état du modèle du système houlomoteur avec sa machine de conversion
- $y$ : vecteur des sorties du modèle dynamique globale du système houlomoteur avec sa machine de conversion, qui sont : la vitesse du flotteur $\dot{z}$ et la force appliquée par la machine de conversion au système houlomoteur $u\_a$
- $A_c$, $B_{cu}$, $B_{cw}$, $C_c$ : matrices de la représentation d'état à temps continu du modèle dynamique global du système houlomoteur avec sa machine de conversion. Le modèle du système houlomoteur peut être calculé par un bilan des forces à l'aide de coefficients hydrostatiques calculés ou identifiés expérimentalement ou directement par une procédure d'identification expérimentale, et englobe notamment le modèle de la force de radiation. Si le modèle est linéaire, il peut être représenté par ces matrices (c'est un formalisme). Ce modèle relie la force exercée par la vague sur le moyen mobile $w$ et la commande de la force demandée à la machine de conversion $u$ à la vitesse du moyen mobile $v$ (ou $\dot{z}$)
- $A$, $B_u$, $B_w$, $C$, $D_u$, $D_w$ : matrices de la représentation d'état à temps discret du système houlomoteur intégrant la machine de conversion, obtenues en discrétisant avec la méthode de Tustin la représentation à temps continu pour une période d'échantillonnage donnée. Cette représentation d'état est utilisée pour la synthèse de la commande.
- $P_a$ : puissance moyenne générée par le système houlomoteur.
- $t$ : temps continu
- $k$ : temps discret
- $T$ : durée prédéterminée.
- $\eta$ : rendement de la conversion de l'énergie, avec

    ▪ $\eta_p$ : rendement moteur de la machine de conversion, il s'agit d'une donnée constructeur ou d'une donnée déterminée expérimentalement.
    ▪ $\eta_n$ : rendement générateur de la machine de conversion, il s'agit d'une donnée constructeur ou d'une donnée déterminée expérimentalement.

- $T_p$ : horizon de prédiction
- $N_p$ : le nombre de pas de temps discrets contenus dans l'horizon de prédiction
- $q_j$ : coefficients de pondération à appliquer à la prédiction de puissance extraite pour à chaque $j$ de l'horizon de prédiction, $j = 1, 2, ..., N_p - 2$
- $\mathbf{u_e}$ : vecteur des commandes de force données à la machine de conversion pour chaque pas de l'horizon de prédiction.
- H : matrice de pondération sur le vecteur $\mathbf{u_e}$.
- $\mathbf{w_e}$ : vecteur des prédictions de la force de la houle.
- $\mathbf{f}$ : matrice de pondération sur l'état courant $x$ du modèle dynamique global du système houlomoteur et le vecteur des prédictions de la force de la houle $w_e$

- $w_e$ : vecteur des prédictions de la force de la houle.

Pour ces notations, la dérivée par rapport au temps est notée par un point au-dessus de la variable considérée. Le temps est noté $t$ (variable continue), ou $k$ (variable discrète).

Dans la suite de la description et pour les revendications, les termes vagues, flots marins et houle sont considérées comme équivalents.

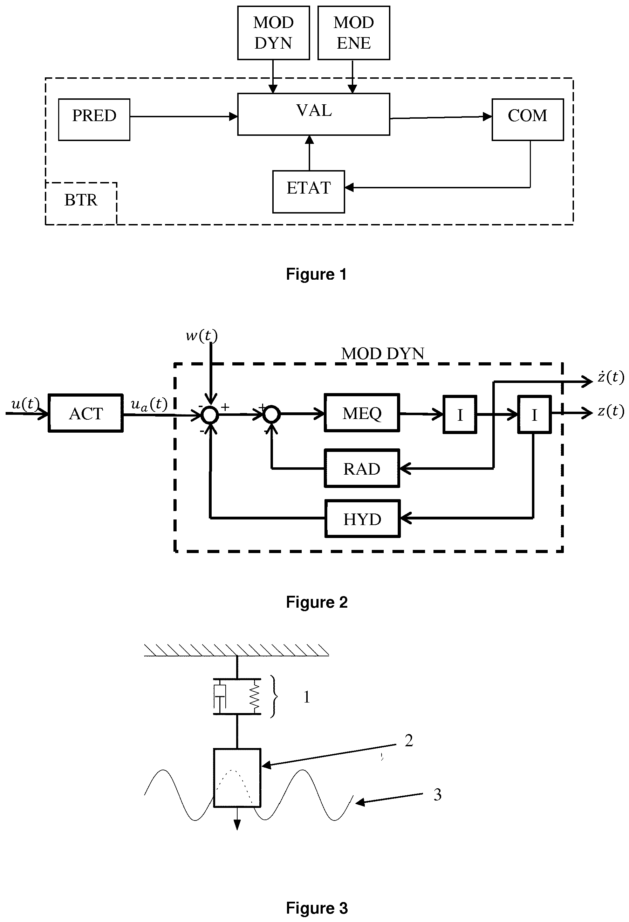

L'invention concerne un procédé de commande d'un système houlomoteur. La figure 1 représente les différentes étapes du procédé selon l'invention :

1. Construction d'un modèle dynamique (MOD DYN)
2. Construction d'un modèle énergétique (MOD ENE)
3. Prédiction de la force exercée par les vagues (PRED)
4. Estimation de l'état du système (ETAT)
5. Détermination de la valeur de commande (VAL)
6. Commande de la machine de conversion (COM)

Les étapes 1 et 2 sont des étapes qui peuvent être réalisées préalablement. Elles font partie d'une procédure de calibration quand la machine est mise en place. Les étapes 3 à 6 sont réalisées en temps réel, dans une boucle temps réel (BTR).

Selon une variante de réalisation, le procédé peut comporter un étape facultative supplémentaire, qui consiste à déterminer des coefficients de pondération. Cette étape peut être réalisée hors ligne à la suite des étapes 1 et 2 et en utilisant les étapes 4 à 6. Cette étape facultative sera décrite plus en détail dans la description de l'étape de pondération numérotée 5) iii.

De manière avantageuse, le procédé de commande selon l'invention peut être mis en œuvre par des moyens informatiques, par exemple un ordinateur.

Etape 1) Construction d'un modèle dynamique (MOD DYN)

Lors de cette étape, on construit un modèle dynamique du système houlomoteur. Le modèle dynamique représente le comportement dynamique, traduisant le mouvement des éléments constituant le système houlomoteur sous l'action des vagues et sous l'action de la commande de force donnée à la machine de conversion. Le modèle dynamique est un modèle qui relie la vitesse du moyen mobile à la force exercée par les vagues sur le moyen mobile à la commande de force donnée à la machine de conversion qui est à son tour traduite en une force exercée par la dite machine de conversion sur le moyen mobile.

Conformément à un mode de réalisation de l'invention, le modèle de dynamique peut être obtenu par application du principe fondamental de la dynamique sur le moyen mobile du système houlomoteur. Pour cette application, on prend en compte notamment la force exercée par la houle sur le moyen mobile et la force exercée par la machine de conversion sur le moyen mobile.

La figure 2 illustre, schématiquement et de manière non limitative, la construction du modèle dynamique selon un mode de réalisation de l'invention. En entrée du modèle, on a la commande de force demandée à la machine de conversion u(t), qui est convertie, en la force exercée par la machine de conversion sur le moyen mobile $u_a$(t), au moyen de l'actionneur ACT. L'actionneur ACT n'est autre que la machine de conversion, augmentée de son propre système de commande, permettant de délivrer la commande de force u(t) demandée. La force délivrée au moyen mobile par la machine de conversion $u_a$(t) et la force w(t) exercée par la houle sur le moyen mobile rentrent ensuite dans la partie du modèle qui correspond à la dynamique du moyen mobile (MOD DYN), son fonctionnement mécanique et hydrodynamique. On y retrouve notamment la masse équivalente du moyen mobile (MEQ), l'amortissement dû à la force de radiation (RAD) et un terme de rappel hydrostatique (HYD). A travers des intégrateurs (I), ce modèle permet de calculer la position relative z(t) et la vitesse du moyent mobile $\dot{z}(t)$.

Selon une mise en œuvre de l'invention, l'actionneur peut être considérée idéal, c'est-à-dire capable de traduire instantanément u(t) en $u_a$(t), soit $u_a$(t)=u(t). Il s'agit d'une approximation qui se justifie lorsque l'actionneur a une dynamique beaucoup plus rapide que celle du moyen mobile.

Selon une mise en œuvre de l'invention, on peut considérer un système houlomoteur avec une partie flottante (moyen mobile) dont le mouvement oscillant de translation ou de rotation est contraint dans une seule dimension. On peut alors supposer que le mouvement de translation ou de rotation puisse être décrit par un modèle linéaire sous forme d'état qui inclut la dynamique du flotteur avec son interaction avec la houle et la dynamique du système de prise de puissance (PTO), ou machine de conversion, qui constitue l'actionneur du système.

Dans la suite de la description, seul un mouvement unidirectionnel est considéré pour le modèle dynamique.

Toutefois, le modèle dynamique peut être développé pour un mouvement multidirectionnel.

La partie de ce modèle qui concerne la dynamique du flotteur (moyen mobile) avec son interaction avec la houle peut être obtenue de manière standard en appliquant la théorie linéaire des vagues (à partir du principe fondamental de la dynamique) :

$$M\ddot{z}(t) = F_{ex}(t) + F_{hd}(t) + F_{rad}(t) - F_u(t)$$

où $M$ est la masse total du moyen mobile et de toutes le parties de la machine solidaires du flotteur, $\ddot{z}$ son accélération ($z$ étant sa position, calculée comme déviation par rapport au point d'équilibre, et $\dot{z}$, sa vitesse), $F_{ex}$ la force d'excitation de la vague incidente, incluant également les effets de la diffraction, $F_u$ la force exercée par le PTO, $F_{hd}$ la force de rappel hydrostatique et $F_{rad}$ la force de radiation.

Pour un flotteur dont le mouvement principal est le tangage, on peut remplacer la masse par le moment d'inertie, l'accélération par l'accélération angulaire $\ddot{\theta}$ et les forces par les moments de force (ou couples) $M_{ex}$, $M_{hd}$, $M_{rad}$ et $M_u$, soit :

$$J\ddot{\theta}(t) = M_{ex}(t) + M_{hd}(t) + M_{rad}(t) - M_u(t)$$

Dans la suite, on écrit le modèle dynamique du système houlomoteur comme il suit

$$M\ddot{z}(t) = F_{hd}(t) + F_{rad}(t) + w(t) - u_a(t)$$

où $w(t) = F_{ex}(t)$, la force d'excitation de la vague incidente, et $u_a(t) = F_u(t)$, la force exercée par le PTO sur le flotteur, sont les deux entrées du système. La première est subie, tandis que la seconde permet de contrôler le système. On considère $u_a$ comme issue à son tour d'un système dynamique reliant la force réellement exercée par le PTO à $u(t)$, la commande de la force demandée au PTO (machine de conversion). Ce système peut être écrit sous forme de représentation d'état :

$$\begin{cases} \dot{x}_a(t) = A_a x_a(t) + B_a u(t) \\ u_a(t) = C_a x_a(t) + D_a u(t) \end{cases}$$

De cette manière, avec $D_a = 0$, on peut prendre en compte dans le modèle de commande la dynamique de l'actionneur du système houlomoteur, qui peut ne pas être négligeable (c'est-à-dire qui peut ne pas être suffisamment rapide pour être négligée) par rapport à la dynamique propre du système houlomoteur. Et avec $A_a = 0$, $B_a = 0$, $C_a = 0$, $D_a = 1$, $u_a(t) = u(t)$, on peut traiter le cas de l'actionneur parfait, à la dynamique négligeable (par rapport à la dynamique propre au système houlomoteur).

La force de rappel hydrostatique peut être considérée comme une fonction linéaire de z(t) :

$$F_{hd}(t) = -Kz(t)$$

où K est le coefficient de raideur hydrostatique.

Ensuite, toujours selon la théorie linéaire des vagues, la force de radiation peut être calculée au moyen d'une équation de la forme :

$$F_{rad}(t) = -M_\infty \ddot{z}(t) - F_r(t)$$

où $M_\infty$ est la masse ajoutée à fréquence infiniment élevée et

$$F_r(t) = \int_0^t h(t - \tau)\dot{z}(\tau)d\tau$$

est la réponse impulsionnelle de la composante de la force de radiation due à la vitesse du flotteur, qui peut être approximée numériquement par la méthode des éléments frontière (BEM, de l'anglais « boundary element methods ») ou analytiquement pour des géométries particulières (très simples) du flotteur. On peut considérer l'équation précédente comme un système linéaire avec $F_r(t)$ en sortie et $\dot{z}(\tau)$ en entrée. Dans le domaine fréquentiel (de Laplace), avec la méthode de Prony, on obtient :

$$F_r(s) = W_r(s)\dot{z}(s)$$

où $W_r(s)$ est une fonction de transfert, et $F_r(s), W_r(s)$ et $\dot{z}(s)$ sont les transformées de Laplace de $F_r(t), h(t)$ et $\dot{z}(t)$, respectivement. Cette équation dans le domaine de Laplace, peut être mise sous une forme d'état équivalente, par exemple :

$$\begin{cases} \dot{x}_r(t) = A_r x_r(t) + B_r \dot{z}(t) \\ F_r(t) = C_r x_r(t) + D_r z(t) \end{cases}$$

où $x_r$ est un état interne n'ayant pas de signification physique particulière et $(A_r, B_r, C_r, D_r)$ sont les matrices de la réalisation d'état.

En définissant

$$\begin{cases} x_1(t) = z(t) \\ x_2(t) = \dot{z}(t) \end{cases}$$

on peut écrire le modèle global (c'est-à-dire incluant la dynamique du flotteur et celle de l'actionneur), comme il suit :

$$\begin{cases} \dot{x}_1(t) = x_1(t) \\ \dot{x}_2(t) = -\dfrac{K}{J + J_\infty} x_1(t) - \dfrac{D_r}{J + J_\infty} x_2(t) - \dfrac{C_r}{J + J_\infty} x_r(t) - \dfrac{C_a}{J + J_\infty} u_a(t) + \dfrac{1}{J + J_\infty} w(t) \\ \dot{x}_r(t) = B_r x_2(t) + A_r x_r(t) \\ \dot{x}_a(t) = A_a x_a(t) + B_a u(t) \\ u_a(t) = C_a x_a(t) \end{cases}$$

En revenant à l'équation de départ (application de la théorie linéaire des vagues au flotteur), la dynamique du système houlomoteur peut être mise sous forme de représentation d'état comme il suit.

$$\begin{cases} \dot{x}(t) = A_c x(t) + B_{cu} u(t) + B_{cw} w(t) \\ y(t) = C_c x(t) \end{cases}$$

où

$$x(t) = \begin{bmatrix} x_1(t) \\ x_2(t) \\ x_r(t) \\ x_a(t) \end{bmatrix}, \quad y(t) = \begin{bmatrix} x_2(t) \\ u_a(t) \end{bmatrix}$$

et

$$A_c = \begin{bmatrix} 0 & 1 & 0 & 0 \\ -\dfrac{K}{J+J_\infty} & -\dfrac{D_r}{J+J_\infty} & -\dfrac{C_r}{J+J_\infty} & -\dfrac{C_a}{J+J_\infty} \\ 0 & B_r & A_r & 0 \\ 0 & 0 & 0 & A_a \end{bmatrix}, \quad B_{cu} = \begin{bmatrix} 0 \\ 0 \\ 0 \\ B_a \end{bmatrix}, \quad B_{cw} = \begin{bmatrix} 0 \\ \dfrac{1}{J+J_\infty} \\ 0 \\ 0 \end{bmatrix}$$

$$C_c = \begin{bmatrix} 0 & 1 & 0 & 0 \\ 0 & 0 & 0 & C_a \end{bmatrix}$$

Par simplicité, on peut s'intéresser seulement à la vitesse du flotteur. La position n'apparaît donc pas parmi les sorties de la représentation d'état. Toutefois, d'autres modèles dynamiques prenant en compte la position peuvent être appliqués au procédé de commande selon l'invention.

Etape 2) Construction d'un modèle énergétique (MOD ENE)

Lors de cette étape, on construit un modèle énergétique du système houlomoteur. Le modèle énergétique représente le bilan énergétique entre l'énergie générée par la machine de conversion (c'est-à-dire l'énergie fournie au réseau) et l'énergie houlomotrice. Selon l'invention, ce modèle prend en compte le rendement imparfait de la conversion de l'énergie mécanique en énergie électrique ou hydraulique ainsi que le rendement imparfait de la conversion d'énergie électrique ou hydraulique en énergie mécanique. Le modèle énergétique relie la puissance moyenne générée par la machine de conversion à la force exercée par la machine de conversion sur le moyen mobile, à la vitesse du moyen mobile et au rendement des convertisseurs énergétiques.

Selon un mode de réalisation de l'invention, le modèle énergétique du système houlomoteur peut être déterminé à partir de la puissance moyenne qui est générée par la machine de conversion PTO pendant une durée T, qui peut être calculée avec une formule du type : $P_a = \frac{1}{T}\int_{t=0}^{T}\eta u_a(t)v(t)dt.$ Si le système houlomoteur a pour but de générer de la puissance électrique, il s'agit de la puissance électrique moyenne générée. La définition de la puissance moyenne générée ci-dessus est telle que la puissance moyenne a un signe négatif si l'énergie est extraite du système (énergie générée) et par exemple fournie au réseau électrique. Une maximisation de la puissance moyenne générée correspond donc à une minimisation de cette puissance.

Selon l'invention, la fonction $\eta$ est utilisée pour modéliser un rendement imparfait de la chaîne de conversion de l'énergie. Dans ce cas-là, la quantité d'énergie générée dans le mode moteur est diminuée et le coût de l'énergie fournie au système (pour le mettre en résonance avec les vagues avec le mode moteur) augmente. Un modèle simple qui utilise l'hypothèse peut s'écrire selon une équation du type : $\eta(u_a v) = \begin{cases} \eta_p \ si \ u_a v \geq 0 \\ \eta_n \ si \ u_a v < 0 \end{cases}$ où les rendements moteur et générateur vérifient les inéquations suivantes $0 < \eta_p \leq 1$ et $\eta_n \geq 1$. Ces rendements dépendent de la machine de conversion du système houlomoteur et peuvent même être une fonction de $u_a v$.

Etape 3) Prédiction de la force exercée par les vagues (PRED)

Pour cette étape, on prédit en temps réel la force exercée par les vagues sur le moyen mobile pour une période future d'une durée prédéterminée $T$. Cette durée prédéterminée T peut être à court terme, par exemple d'une durée de 5 à 10 secondes. On choisit alors une méthode de prédiction et on l'applique à l'instant considéré.

Selon un mode de réalisation, les valeurs futures de la force exercée sur le moyen mobile par la houle peuvent être extrapolées en utilisant par exemple un modèle autorégressif identifié en ligne, par exemple tel que décrit dans la demande de brevet dont le numéro de dépôt est FR 15/60260.

Selon une alternative, on prédit la force exercée par les vagues sur le moyen mobile en utilisant un ensemble de capteurs disposés en amont du dispositif. Ces capteurs peuvent mesurer notamment l'élévation et la fréquence des vagues, ces mesures pouvant être utilisés pour reconstruire la force des vagues en aval.

La force exercée par les vagues sur le moyen mobile n'étant pas directement mesurable en temps-réel durant le fonctionnement normal du système houlomoteur, il faut l'inférer ou l'estimer à partir de capteurs disponibles sur le système houlomoteur ou de capteurs disposés en amont du système houlomoteur. Selon une alternative, on utilise un ensemble de capteurs disposés en amont du dispositif, qui peuvent mesurer notamment l'élévation et la fréquence des vagues, pour reconstruire la force des vagues sur le dispositif en aval et fournir en même temps une prédiction à court terme. Selon un mode de réalisation de l'invention, une possibilité est d'estimer en temps réel la force exercée sur le moyen mobile par la houle avec par exemple un ensemble de capteurs de pression disposés au niveau du moyen mobile ou des capteurs de force entre moyen mobile et la machine de conversion ou des capteurs d'élévation de la houle.

En variante, on peut estimer en temps-réel la force exercée par les vagues sur le moyen mobile en mettant en œuvre un procédé de détermination de la force d'excitation exercée par la houle incidente sur un moyen mobile d'un système houlomoteur au moyen d'un modèle de la force de radiation, tel que décrit dans la demande de brevet dont le numéro de dépôt est FR 16/53109.

Etape 4) Estimation de l'état du système (ETAT)

Lors de cette étape, on détermine en temps réel l'état actuel du système houlomoteur. Pour cette étape, on peut estimer l'état actuel au moyen d'un observateur d'état du système. Cet observateur d'état peut être réalisé par synthèse d'un filtre de Kalman à partir du modèle dynamique du système houlomoteur. Par exemple, l'observateur est construit à partir des modèles linéaires exposés à l'étape 1.

De plus, l'observateur peut prendre en compte la commande actuelle de la machine de conversion pour déterminer l'état actuel du système houlomoteur, par exemple au moyen de la commande aux instants précédant l'instant considéré.

Etape 5) Détermination de la valeur de commande (VAL)

Lors de cette étape, on détermine en temps réel une valeur de commande de la force exercée par la machine de conversion sur le moyen mobile, la valeur de commande maximise la puissance moyenne générée par la machine de conversion. Pour cela, la détermination est réalisée au moyen de la prédiction de la force exercée par les vagues (Etape 3), du modèle dynamique (Etape 1) et du modèle énergétique (Etape 2). De plus, cette détermination peut être mise en œuvre en prenant en compte de l'état du système (Etape 4).

L'utilisation de la prédiction de la force exercée par la houle donne la caractéristique prédictive du procédé de commande selon l'invention. L'utilisation d'un modèle énergétique prenant en compte le rendement des conversions énergétiques assure la prise en compte des pertes énergétiques, ce qui permet une commande optimale qui maximise la puissance moyenne générée par la machine de conversion.

En effet, si le rendement $\eta$ est différent de 1, le produit entre commande u et vitesse optimale v change d'une façon importante à cause du coût de l'énergie fournie à la machine, lié notamment aux pertes énergétiques.

Avec les formulations des modèles dynamique et énergétique, la recherche de la commande optimale avec des contraintes sur la commande u et sur l'état du système x peut être formulée d'une façon générale : $\min_{u_a} P_a$ en fonction des modèles et des contraintes suivantes : $u_{min} \le u \le u_{max}$ et $x_{min} \le x \le x_{max}$.

Selon l'invention, on détermine une valeur de commande de ladite force exercé par ladite machine de conversion sur ledit moyen mobile maximisant la puissance moyenne générée par ladite machine de conversion, en mettant en œuvre les étapes suivantes :

i) on détermine une fonction objectif représentative de la puissance générée par la machine de conversion au moyen de la prédiction de la force exercée par la houle sur le moyen mobile, du modèle dynamique et du modèle énergétique ;
ii) on discrétise la fonction objectif par la méthode des trapèzes ;
iii) on pondère, dans la fonction objectif, les valeurs futures de la puissance instantanée générée par des coefficients de pondération ;
iv) on déduit la valeur de commande de la force exercée par la machine de conversion sur le moyen mobile par minimisation de la fonction objectif discrétisée et pondérée.

*i) Détermination de la fonction objectif*

Lors de cette étape, on détermine une fonction objectif représentative de la puissance générée par la machine de conversion. La fonction objectif va être ensuite minimisée (étape iv), de manière à maximiser la puissance récupérée par le système houlomoteur. La fonction objectif est déterminée en appliquant le modèle énergétique et le modèle dynamique à la prédiction de la force exercée par la houle.

Plus précisément, la minimisation de la fonction objectif que l'on cherche à résoudre au temps *t,* avec l'horizon de prédiction $T_p$, peut être formulée de la manière suivante :

$$\min_u \int_t^{t+T_p} -\eta u_a(t)v(t)dt$$

$$\begin{cases} u_{min} \le u \le u_{min} \\ x_{min} \le x \le x_{min} \end{cases}$$

$u_a(t)$ étant obtenu par le modèle dynamique au moyen de la prédiction de la force de la houle.

On peut noter qu'on change le signe dans l'intégrale pour pouvoir poser un problème de minimisation équivalent.

*ii) Discrétisation de la fonction objectif*

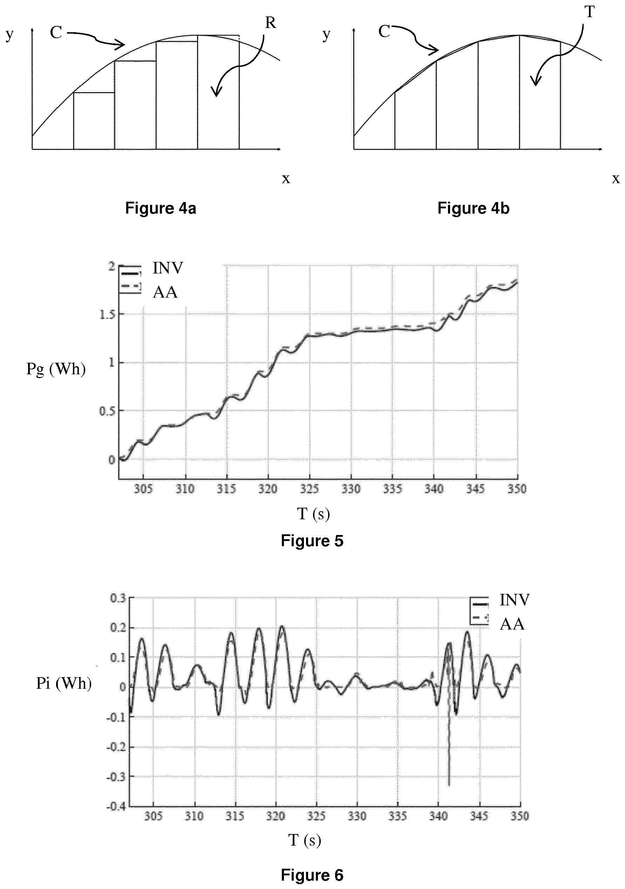

Lors de cette étape, on discrétise la fonction objectif, afin de pouvoir résoudre facilement le problème de minimisation. Selon l'invention, cette discrétisation est mise en œuvre au moyen de la méthode des trapèzes. La méthode des trapèzes est une méthode pour le calcul numérique d'une intégrale s'appuyant sur une interpolation linéaire par intervalles. Le principe consiste à assimiler la région sous la courbe représentative d'une fonction à un trapèze, et d'en calculer l'aire. La méthode des trapèzes permet une meilleure approximation de la fonction objectif (plus précise) que la méthode des rectangles utilisée dans l'art antérieur. Cette meilleure précision est illustré aux figures 4a et 4b. La figure 4a illustre, dans un repère (x, y) l'approximation d'une courbe C par la méthode des rectangles R. La figure 4b illustre, dans un repère (x, y), l'approximation d'une courbe C par la méthode des trapèzes T. On remarque sur ces figures que la courbe C est approximée de manière plus précise par les trapèzes que par les rectangles.

La méthode des trapèzes est appliquée de manière à faire apparaître une deuxième fois la commande $u_a$ dans la fonction objectif, en rajoutant au terme donné par la commande à l'instant $k + j$ multipliée par la vitesse à l'instant $k + j$, un nouveau terme donné par la commande à l'instant $k + j$ multipliée par la vitesse à l'instant $k + j + 1$. Ce terme supplémentaire permet de rendre la fonction objectif convexe.

Selon un mode de réalisation de l'invention, le modèle continu du système houlomoteur qui s'écrit :

$$\begin{cases} \dot{x}(t) = A_c x(t) + B_{cu} u(t) + B_{cw} w(t) \\ y(t) = C_c x(t) \end{cases}$$

Ce modèle peut être discrétisé avec la méthode de Tustin avec une période d'échantillonnage donnée :

$$\begin{cases} x(k + 1) = A x(k) + B_u u(k) + B_w w(k) \\ y(k) = C x(k) + D_u u(k) + D_w w(k) \end{cases}$$

où $A$, $B$, $B_u$, $B_w$, $C$, $D_u$ et $D_w$ sont les matrices issues de la discrétisation du système à temps continu.

Concernant le critère intégral à minimiser, dans les méthodes proposées jusqu'ici pour les systèmes houlomoteurs, la discrétisation s'est faite à travers la méthode des rectangles, ce qui donne :

$$\min_{u(k|k),u(k+1|k),...,u(k+N_p-1|k)} \sum_{j=0}^{N_p-1} -\eta(k + j|k)u_a(k + j|k)v(k + j|k)$$

tel que

$$\begin{cases} u_{min} \leq u(k + j|k) \leq u_{min}, \ j = 0, 1, ... , N_p - 1 \\ x_{min} \leq x(k + j|k) \leq x_{min}, \ j = 0, 1, ... , N_p - 1 \end{cases}$$

où $N_p$ est le nombre de pas de temps discrets contenus dans l'horizon de prédiction (tel que $T_p = N_p h$, où $h$ est la période d'échantillonnage), où $u(k + j|k)$, $u_a(k + j|k)$, $v(k + j|k)$ et $\eta(k + j|k)$ représentent, respectivement, la commande prédite, la sortie de la machine de conversion prédite, la vitesse du flotteur prédite et le rendement prédit au temps $k + j$ à partir des informations disponibles au temps $k$.

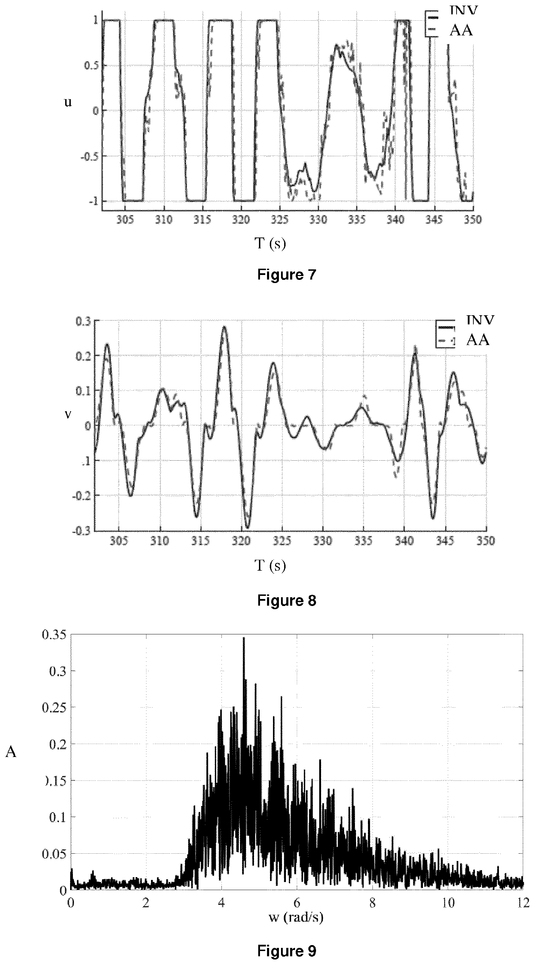

Cette approche de discrétisation est celle suivie pour la stratégie de commande décrite par la demande de brevet FR 3019235 (WO 2015/150102). On la retrouve aussi dans l'art antérieur pour le cas plus simple et moins réaliste $\eta$=1 (et sans dynamique d'actionneur). La fonction objectif qui en résulte n'est pas convexe, même pour $\eta$=1, ce qui rend le problème d'optimisation difficile à résoudre en ligne de manière efficace. Dans le cas $\eta$=1 et $u_a(t) = u(t)$, une convexification de la fonction objectif proposée basée sur l'ajout d'une pénalité sur la commande pourrait être envisagée. Toutefois, on peut montrer que cette modification mène à une solution largement sous-optimale, avec une perte significative d'énergie récupérée, même pour le cas de figure plus simple considéré (cf. figure 9 qui sera décrite plus en détail à la fin de la description).

Selon un mode de réalisation de l'invention, on suppose que la vitesse de variation de $v(t)$ est beaucoup plus importante que celle de $u_a(t)$. Ce qui est raisonnable, car $u_a(t)$ est la sortie d'un système dynamique dont l'entrée $u(t)$ est maintenue constante entre chaque période d'échantillonnage.

En appliquant avantageusement la méthode des trapèzes, la fonction objectif discrétisée et à minimiser peut s'écrire :

$$\min_{u(k|k),u(k+1|k),\ldots,u(k+N_p-1|k)} \sum_{j=0}^{N_p-2} -\eta(k+j|k)u_a(k+j|k)(v(k+j|k)+v(k+j+1|k))$$

tel que

$$\begin{cases} u_{min} \leq u(k+j|k) \leq u_{min}, & j=0,1,\ldots,N_p-1 \\ x_{min} \leq x(k+j|k) \leq x_{min}, & j=0,1,\ldots,N_p-1 \end{cases}$$

À noter que l'utilisation de la méthode des trapèzes permet de faire apparaitre dans la fonction objectif la moyenne entre deux valeurs successives (aux pas $k+j$ et pas $k+j+1$) de la vitesse $v$ et donc de la puissance extraite prédite. Le facteur deux qu'on devrait avoir au dénominateur pour faire la moyenne peut être retiré de la fonction objectif car il n'a pas d'influence sur la solution optimale. C'est la présence du terme supplémentaire $u_a(k+j|k)v(k+j+1|k)$, qui permet de rendre la fonction objectif convexe.

*iii) Pondération de la fonction objectif*

Afin de rendre le problème de minimisation convexe, dans le but de rendre la détermination de la commande rapide et possible en temps réel, on introduit des pondérations dans la fonction objectif discrétisée. Le but est de pondérer les valeurs futures prédites de la puissance extraite au moyen de coefficients de pondération. Ainsi, pour une commande optimisée, on peut donner une importance plus grande aux prédictions futures proches (en appliquant des pondérations relativement petites) et une importance moindre aux prédictions futures éloignées (en appliquant des pondérations relativement grandes).

Selon un mode de réalisation de l'invention, en appelant $q_j$ le coefficient de pondération pour le pas $j$ de l'horizon de prédiction, on peut alors introduire la nouvelle fonction objectif discrétisée et pondérée :

$$\mathbf{J} = \sum_{j=0}^{N_p-2} q_j u_a(k+j|k)(v(k+j|k)+v(k+j+1|k))$$

au sein du problème de commande :

$$\min_{u(k|k),u(k+1|k),\ldots,u(k+N_p-1|k)} \mathbf{J}$$

tel que

$$\begin{cases} u_{min} \leq u(k+j|k) \leq u_{max}, & j=0,1,\ldots,N_p-1 \\ x_{min} \leq x(k+j|k) \leq x_{max}, & j=0,1,\ldots,N_p-1 \end{cases}$$

où les $q_j \leq 0$ ($j=1, 2, \ldots, N_p-2$) sont des paramètres de réglage à choisir, permettant de pondérer de manière différente $u_a(k+j|k)(v(k+j|k)+v(k+j+1|k))$, la prédiction de la puissance récupérée au temps $k+j$.
Dans cette formulation, le rendement $\eta$ est pris en compte dans les coefficients de pondération $q_0, q_1, \ldots, q_{N_p-2}$.

Selon un mode de réalisation, on peut choisir des pondérations croissantes au fil du temps, soit :

$$q_0 \leq q_1 \leq \ldots \leq q_{N_p-2}$$

Ainsi, les prédictions de l'énergie récupérée les plus lointaines dans le futur auront de moins en moins d'impact dans le critère $\mathbf{J}$. Ceci est fort raisonnable, dans la mesure où les prédictions de la vitesse $v(k+j|k)$ sont calculées à partir des prédictions de la force de la houle, $w(k+j|k)$, qui sont de moins en moins précises lorsqu'on avance dans l'horizon de prédiction. De cette manière, on choisit de faire moins confiance aux prédictions plus lointaines et moins précises, ce qui est bénéfique pour la robustesse de loi de commande

En outre, on peut choisir la première pondération beaucoup plus petite que toutes les autres, soit :

$$q_0 \ll q_j \, , \; j = 1, 2, \dots, N_p - 2.$$

Ainsi, la solution optimale tend à faire en sorte que $u_a(k|k)v(k|k) \geq 0$, c'est-à-dire que $u_a(k|k)$ et $v(k|k)$ aient le même signe. En d'autres termes, la loi de commande obtenue par cette variante de réalisation permet d'éviter l'utilisation de puissance réactive (prélevée sur le réseau).

Une fois introduite la nouvelle formulation de la fonction objectif, en utilisant des passages mathématiques standards pour la commande avec une approche de commande prédictive à horizon glissant (MPC de l'anglais « Model Prédictive Control »), il est possible de la réécrire sous forme matricielle compacte comme indiqué dans la suite.

En utilisant l'équation d'état (la première équation) du modèle du système :

$$\begin{cases} x(k+1) = Ax(k) + B_u u(k) + B_w w(k) \\ y(k) = Cx(k) + D_u u(k) + D_w w(k) \end{cases}$$

on peut exprimer les états prédits $x(k+j|k)$ séquentiellement, en fonction de l'état courant du système $x(k|k) = x(k)$, de l'ensemble des commandes prédites $u(k+j|k)$ et de l'ensemble des forces d'excitation de la vague prédites $w(k+j|k)$, pour $j = 1,2, \dots N_{p-1}$

$$\begin{cases} x(k+1|k) & = Ax(k|k) + B_u u(k|k) + B_w w(k|k) \\ x(k+2|k) & = Ax(k+1|k) + B_u u(k+1|k) + B_w w(k+|k) \\ & = A^2 x(k|k) + AB_u u(k|k) + B_u u(k+1|k) + AB_w w(k|k) + B_w w(k+|k) \\ & \vdots \\ x(k+N_p-1|k) & = A^{N_p-1} x(k|k) + A^{N_p-2} B_u u(k|k) + B_u u(k+N_p-1|k) + \\ & \quad + A^{N_p-2} B_w w(k|k) + B_w w(k+N_p-1|k) \end{cases}$$

Ce qui peut également s'écrire en forme matricielle, comme suit :

$$\mathbf{x}_e = \mathbf{A}_e x(k|k) + \mathbf{B}_{ue} \mathbf{u}_e + \mathbf{B}_{we} \mathbf{w}_e$$

où

$$\mathbf{x}_e = \begin{bmatrix} x(k|k) \\ x(k|+1k) \\ x(k+N_p-1|k) \end{bmatrix}, \; \mathbf{u}_e = \begin{bmatrix} u(k|k) \\ u(k|+1k) \\ u(k+N_p-1|k) \end{bmatrix}, \; \mathbf{w}_e = \begin{bmatrix} w(k|k) \\ w(k|+1k) \\ w(k+N_p-1|k) \end{bmatrix}$$

$$\mathbf{A}_e = \begin{bmatrix} I \\ A \\ A^2 \\ \vdots \\ A^{N_p-1} \end{bmatrix}, \; \mathbf{B}_{ue} = \begin{bmatrix} 0 & 0 & 0 & \cdots & 0 & 0 \\ B_u & 0 & 0 & \cdots & 0 & 0 \\ AB_u & B_u & 0 & \cdots & 0 & 0 \\ \vdots & \vdots & \vdots & \ddots & \vdots & \vdots \\ A^{N_p-2} B_u & A^{N_p-3} B_u & A^{N_p-4} B_u & \cdots & B_u & 0 \end{bmatrix}$$

et

$$\mathbf{B}_{we} = \begin{bmatrix} 0 & 0 & 0 & \cdots & 0 & 0 \\ B_w & 0 & 0 & \cdots & 0 & 0 \\ AB_w & B_w & 0 & \cdots & 0 & 0 \\ \vdots & \vdots & \vdots & \ddots & \vdots & \vdots \\ A^{N_p-2}B_w & A^{N_p-3}B_w & A^{N_p-4}B_w & \cdots & B_w & 0 \end{bmatrix}$$

De manière analogue, en utilisant l'équation de sortie (la première équation) du modèle du système, on obtient :

$$\begin{cases} y(k|k) & = Cx(k|k) + D_u u(k|k) + D_w w(k|k) \\ y(k+1|k) & = Cx(k+1|k) + D_u u(k+1|k) + D_w w(k+|k) \\ \vdots \\ y(k+N_p-1|k) & Cx\big(kk+N_p-1|k\big) + D_u u\big(k+N_p-1|k\big) + D_w w\big(k+N_p-1|k\big) \end{cases}$$

que l'on peut récrire en forme matricielle :

$$\mathbf{y}_e = \mathbf{C}_e \mathbf{x}_e + \mathbf{D}_{ue} \mathbf{u}_e + \mathbf{D}_{we} \mathbf{w}_e$$

où

$$\mathbf{y}_e = \begin{bmatrix} y(k|k) \\ y(k|+1k) \\ y\big(k+N_p-1|k\big) \end{bmatrix}, \mathbf{C}_e = \begin{bmatrix} C & 0 & \cdots & 0 \\ 0 & C & \cdots & 0 \\ \vdots & \vdots & \ddots & \vdots \\ 0 & 0 & \cdots & C \end{bmatrix}$$

et

$$\mathbf{D}_{ue} = \begin{bmatrix} D_u & 0 & \cdots & 0 \\ 0 & D_u & \cdots & 0 \\ \vdots & \vdots & \ddots & \vdots \\ 0 & 0 & \cdots & D_u \end{bmatrix}, \mathbf{D}_{we} = \begin{bmatrix} D_w & 0 & \cdots & 0 \\ 0 & D_w & \cdots & 0 \\ \vdots & \vdots & \ddots & \vdots \\ 0 & 0 & \cdots & D_w \end{bmatrix}$$

En insérant l'équation matricielle qui définit $\mathbf{x}_e$ dans celle qui définit $\mathbf{y}_e$, on obtient :

$$\mathbf{y}_e = \mathbf{C}_e \mathbf{A}_e x(k|k) + (\mathbf{C}_e \mathbf{B}_{ue} + \mathbf{D}_{ue})\mathbf{u}_e + (\mathbf{C}_e \mathbf{B}_{we} + \mathbf{D}_{we})\mathbf{w}_e$$

ou, de manière équivalente :

$$\mathbf{y}_e = \Phi x(k|k) + \Psi_u \mathbf{u}_e + \Psi_w \mathbf{w}_e$$

où

$$\Phi = \mathbf{C}_e \mathbf{A}_e, \Psi_u = \mathbf{C}_e \mathbf{B}_{ue} + \mathbf{D}_{ue}, \Psi_w = \mathbf{C}_e \mathbf{B}_{we} + \mathbf{D}_{we}$$

La fonction objectif

$$\mathbf{J} = \sum_{j=0}^{N_p-1} q_j u_a(k+j|k)(v(k+j|k) + v(k+j+1|k))$$

peut être également mise sous forme matricielle, comme suit

$$\mathbf{J} = \mathbf{u}_a^T Q (\mathbf{v}_1 + \mathbf{v}_2)$$

où $Q$ est une matrice diagonale contenant les pondérations

$$Q = \text{diag}([q_0 \quad q_1 \quad \cdots \quad q_{N_p-2}])$$

et

$$\mathbf{u}_a = \begin{bmatrix} u_a(k|k) \\ u_a(k+1|k) \\ \vdots \\ u_a(k+N_p-2|k) \end{bmatrix}, \mathbf{v}_1 = \begin{bmatrix} v(k|k) \\ v(k+1|k) \\ \vdots \\ v(k+N_p-2|k) \end{bmatrix}, \mathbf{v}_2 = \begin{bmatrix} v(k+1|k) \\ v(k+2|k) \\ \vdots \\ v(k+N_p-1|k) \end{bmatrix}$$

En utilisant

$$y(k+j|k) = \begin{bmatrix} v(k+j|k) \\ u_a(k+1|k) \end{bmatrix}, \quad j = 1, 2, \ldots, N_p - 2$$

on a :

$$\mathbf{u}_a = \mathbf{T}_a \mathbf{y}_e, \mathbf{v}_1 = \mathbf{T}_1 \mathbf{y}_e, \mathbf{v}_2 = \mathbf{T}_2 \mathbf{y}_e,$$

où

$$\mathbf{T}_a = \begin{bmatrix} 0 & 1 & 0 & 0 & 1 & 0 & 0 \\ 0 & 0 & 0 & 1 & \cdots & 0 & 0 \\ \vdots & \vdots & \vdots & \vdots & \ddots & \vdots & \vdots \\ 0 & 0 & 0 & 0 & \cdots & 0 & 1 \end{bmatrix}, \mathbf{T}_1 = \begin{bmatrix} 1 & 0 & 0 & 0 & 0 & 0 & 0 \\ 0 & 0 & 1 & 0 & \cdots & 0 & 0 \\ \vdots & \vdots & \vdots & \vdots & \ddots & \vdots & \vdots \\ 0 & 0 & 0 & 0 & \cdots & 1 & 0 \end{bmatrix},$$

$$\mathbf{T}_2 = \begin{bmatrix} 0 & 0 & 1 & 0 & 0 & 0 & 0 \\ 0 & 0 & 0 & 0 & \cdots & 0 & 0 \\ \vdots & \vdots & \vdots & \vdots & \ddots & \vdots & \vdots \\ 0 & 0 & 0 & 0 & \cdots & 1 & 0 \end{bmatrix}$$

Ce qui donne, en remplaçant dans l'expression de **J** :

$$\mathbf{J} = \mathbf{y}_e^T \mathbf{T}_a^T Q (\mathbf{T}_1 + \mathbf{T}_2) \mathbf{y}_e$$

Soit

$$\mathbf{Q} = \mathbf{T}_a^T Q (\mathbf{T}_1 + \mathbf{T}_2).$$

En utilisant l'expression de $\mathbf{y}_e$, **J** devient :

$$\mathbf{J} = (\Phi x(k|k) + \Psi_u \mathbf{u}_e + \Psi_w \mathbf{w}_e)^T \mathbf{Q} (\Phi x(k|k) + \Psi_u \mathbf{u}_e + \Psi_w \mathbf{w}_e)$$

ou, de manière équivalente,

$$\mathbf{J} = \mathbf{u}_e^T \Psi_u^T \mathbf{Q} \Psi_u \mathbf{u}_e + 2\mathbf{u}_e^T \Psi_u^T \mathbf{Q}[\Phi \quad \Psi_w] \begin{bmatrix} x(k|k) \\ \mathbf{w}_e \end{bmatrix} + (\Phi x(k|k) + \Psi_w \mathbf{w}_e)^T \mathbf{Q}(\Phi x(k|k) + \Psi_w \mathbf{w}_e)$$

Le terme final $(\Phi x(k|k) + \Psi_w \mathbf{w}_e)^T \mathbf{Q}(\Phi x(k|k) + \Psi_w \mathbf{w}_e)$ peut être éliminé de J, car il n'influence pas la solution optimale (il ne dépend pas de $\mathbf{u}_e$).

Il en résulte que la fonction objectif peut s'écrire de manière simplifiée :

$$\mathbf{J}' = \mathbf{u}_e^T \Psi_u^T \mathbf{Q} \Psi_u \mathbf{u}_e + 2\mathbf{u}_e^T \Psi_u^T \mathbf{Q}[\Phi \quad \Psi_w] \begin{bmatrix} x(k|k) \\ \mathbf{w}_e \end{bmatrix}$$

ou de manière équivalente

$$\mathbf{J}' = \mathbf{u}_e^T \mathbf{H} \mathbf{u}_e + 2\mathbf{u}_e^T \mathbf{f} \begin{bmatrix} x(k|k) \\ \mathbf{w}_e \end{bmatrix}$$

avec

$$\mathbf{H} = \Psi_u^T \mathbf{Q} \Psi_u, \quad \mathbf{f} = \Psi_u^T \mathbf{Q}[\Phi \quad \Psi_w]$$

Pour compléter la reformulation du problème de commande MPC sous forme matricielle, on exprime les contraintes sur la commande

$$u_{min} \le u(k+j|k) \le u_{min}, \quad j = 0, 1, ..., N_p - 1$$

en termes de contraintes sur $\mathbf{u}_e$. Soit **1** un vecteur de 1 de longueur adaptée, l'ensemble des contraintes est alors

$$\mathbf{1}u_{min} \le \mathbf{u}_e \le \mathbf{1}u_{max}$$

On peut traiter de manière analogue les contraintes sur l'état.

Selon un mode de réalisation de l'invention, la fonction objectif pondérée et discrétisée peut finalement s'écrire sous forme matricielle :

$$\min_{\mathbf{u}_e} \left\{ \mathbf{u}_e^T \mathbf{H} \mathbf{u}_e + 2\mathbf{u}_e^T \mathbf{f} \begin{bmatrix} x(k|k) \\ \mathbf{w}_e \end{bmatrix} \right\},$$

tel que

$$\mathbf{1}u_{min} \le \mathbf{u}_e \le \mathbf{1}u_{max}$$

si on ne considère pas les contraintes sur l'état, par simplicité.

Selon un mode de réalisation de l'invention, les coefficients de pondération $q_j$, $j = 1, 2, ..., N_p - 2$, peuvent être déterminés hors ligne et préalablement aux étapes du procédé de commande. Dans la position du problème MPC, il a été supposé que les pondérations $q_0, q_1, ..., q_{N_p-2}$ ont déjà été choisies. En effet, avant d'appliquer la commande MPC en ligne, on peut passer par une étape d'optimisation hors ligne qui permet de les choisir de manière à ce que la résolution en ligne du problème MPC maximise l'énergie extraite par le système houlomoteur.

En d'autres termes, il faut trouver le meilleur ensemble de paramètres

$$\mathbf{q} = [q_0 \quad q_1 \quad \cdots \quad q_{N_p-2}]^T,$$

c'est-à-dire qui maximise la puissance moyenne extraite $P_a$

$$P_a = \frac{1}{T} \int_{t=0}^{T} \eta \, u_a(t)v(t)dt$$

ou, de manière équivalente :
$$\min_{\mathbf{q}}\{-P_a\}.$$

À noter qu'il s'agit d'un problème d'optimisation difficile à résoudre, car la puissance $P_a$ dépend de la commande $u(t)$ qui, à son tour, est calculée en ligne en résolvant le problème MPC suivant :

$$\min_{\mathbf{u}_e}\left\{\mathbf{u}_e^T\mathbf{H}_m\mathbf{u}_e + 2\mathbf{u}_e^T\mathbf{f}\begin{bmatrix}x(k|k)\\ \mathbf{w}_e\end{bmatrix}\right\},$$

tel que

$$\mathbf{1}u_{min} \le \mathbf{u}_e \le \mathbf{1}u_{max}$$

Donc, $P_a$ est au final une fonction des paramètres $q_j$, $j = 1,2,...,N_p - 2$, qu'il faut optimiser (pour maximiser $P_a$). Pour résoudre ce problème d'optimisation, on peut faire recours à des algorithmes tels que les algorithmes génétiques, l'optimisation par essaims particulaires, la recherche par voisinage variable ou la méthode de Nelder-Mead.

La puissance moyenne $P_a$ n'est pas seulement fonction de $\mathbf{q}$, mais aussi des prédictions de la force de la vague $\mathbf{w}_e$. L'étape d'optimisation de $\mathbf{q}$ peut donc être réalisée sur des séries temporelles de forces de la vague $w(t)$ générées à partir d'un ensemble de spectres d'états de mer qui couvre les conditions de fonctionnement attendues du système houlomoteur.

$$\min_{\mathbf{q}}\left\{-\sum_{l=1}^{n_l} P_{a,l}\right\}$$

Soit $n_l$ le nombre d'états de mer considérés, la fonction objectif à optimiser est alors où chaque $P_{a,l}$ est calculé, pour le $\mathbf{q}$ courant, en simulant le modèle du système houlomoteur

$$\begin{cases}x(k+1) = Ax(k) + B_u u(k) + B_w w(k)\\ y(k) = Cx(k) + D_u u(k) + D_w w(k)\end{cases}$$

avec en entrée la série temporelle $w(k)$ correspondante à l'état de mer $l$, et la commande $u(k)$ calculée en boucle fermée avec la loi de commande MPC

$$\min_{\mathbf{u}_e}\left\{\mathbf{u}_e^T\mathbf{H}_m\mathbf{u}_e + 2\mathbf{u}_e^T\mathbf{f}\begin{bmatrix}x(k|k)\\ \mathbf{w}_e\end{bmatrix}\right\},$$

tel que

$$\mathbf{1}u_{min} \le \mathbf{u}_e \le \mathbf{1}u_{max}$$

obtenue avec le $\mathbf{q}$ courant.

La valeur initiale de $\mathbf{q}$ peut être choisie par exemple comme suit :

$$q_0 = q_1 = \cdots = q_{N_p-2} = -1$$

À noter que, bien que cette étape d'optimisation soit très exigeante en termes de calculs, elle est effectuée hors-ligne, une fois pour toutes, sans contraintes de temps de calcul particulières

*iv) Détermination de la valeur de commande*

Lors de cette étape, on détermine la valeur de la commande de la force exercée par la machine de conversion sur le moyen mobile par minimisation de la fonction objectif discrétisée et pondérée. Pour cette détermination, on mettre en œuvre une approche de commande prédictive à horizon glissant (MPC de l'anglais « Model Prédictive Control »). Ainsi lors de cette étape, on détermine, sous forme discrétisée, pondérée, et matricielle, la commande optimale $\mathbf{u_e}$ telle que :

$$\min_{\mathbf{u}_e}\left\{\mathbf{u}_e^T \mathbf{H}\mathbf{u}_e + 2\mathbf{u}_e^T \mathbf{f}\begin{bmatrix} x(k|k) \\ \mathbf{w}_e \end{bmatrix}\right\},$$

tel que

$$\mathbf{1}u_{min} \leq \mathbf{u}_e \leq \mathbf{1}u_{max}$$

Selon un mode de réalisation basé sur le principe de l'horizon glissant, la solution optimale du problème d'optimisation, on détermine :

$$\mathbf{u}_e^* = [u^*(k|k) \quad u^*(k+1|k) \quad \dots \quad u^*(k+N_p-1|k)].$$

mais seulement la première valeur de la séquence $u^*(k|k)$ est appliquée au système comme commande de la force de la machine de conversion, soit

$$u(k) = u^*(k|k)$$

Tel qu'il a été formulé, pour un ensemble donné de paramètres de pondération $q_j$, $j$ = 1, 2,..., $N_p$ - 2, le problème d'optimisation ci-dessus est un problème de programmation quadratique (QP).
Selon une première mise en œuvre de l'invention, si $u_a(t) = u(t)$, c'est-à-dire si la dynamique de l'actionneur n'est pas incluse dans le modèle de conception de la MPC, le problème d'optimisation est aussi convexe, et peut donc être résolu efficacement (rapidement) en ligne avec des solveurs QP standard (c'est-à-dire des solveurs de programmation quadratique). C'est un résultat important, car dans beaucoup de cas de figure, la dynamique de la machine de conversion du système houlomoteur est bien plus rapide que celle du système houlomoteur (flotteur + parties mobiles) et peut donc être négligée. Le procédé de commande selon l'invention permet donc de traiter efficacement ces cas de figure, sans étapes ultérieures.
Selon une deuxième mise en œuvre de l'invention, si la dynamique de la machine de conversion ne peut pas être négligée et est donc incluse dans le modèle pour la synthèse de la commande MPC, le problème d'optimisation ci-dessus n'est plus convexe, car il n'y aucune garantie que la matrice de pondération quadratique **H** soit définie positive (condition mathématique suffisante pour que le problème soit strictement convexe). Une étape ultérieure peut donc être utilisée afin de le convexifier, avec une perte moindre d'optimalité. Afin de rendre le problème d'optimisation convexe, on peut remplacer les valeurs propres négatives ou nulles de la matrice de pondération **H** par des valeurs positives, de préférence des valeurs positives très petites (par exemple comprises entre 0,0001 et 0,1). Ainsi, le problème d'optimisation peut être résolu de manière efficace par des solveurs QP standard.
Selon un exemple de cette mise en œuvre, on convexifie le problème au moyen de la décomposition de Jordan $\mathbf{H} = S\Lambda S^{-1}$
où $S$ est une matrice non singulière et

$$\Lambda = \mathrm{diag}(\begin{bmatrix} \lambda_0 & \cdots & \lambda_{v-1} & \lambda_v & \cdots & \lambda_{N_p-1} \end{bmatrix})$$

est une matrice diagonale contenant les valeurs propres de **H** (qui sont des nombres réels, car **H** est symétrique), en ordre croissant :

$$\lambda_0 \leq \lambda_1 \leq \ldots \leq \lambda_{v-1} \leq 0 < \lambda_v \leq \ldots \leq \lambda_{N_p-1}$$

$v$ étant le nombre de valeurs propres inférieures ou égales à zéro.

On Considère la matrice diagonale suivante :

$$\Lambda_m = \mathrm{diag}(\begin{bmatrix} \epsilon & \ldots & \epsilon & \lambda_v & \ldots & \lambda_{N_p-1} \end{bmatrix})$$

où les valeurs propres inférieures ou égales à zéro de $\Lambda$ ont été remplacées par un nombre réel positif très petit $\varepsilon$ (p.ex. $\varepsilon = 0.001$).

Définissons **H**$_m$ comme

$$\mathbf{H}_m = S\Lambda_m S^{-1}.$$

Puisque ses valeurs propres sont toutes strictement positives, **H**$_m$ est une matrice définie positive. Si l'on remplace **H** par **H**$_m$ dans la fonction coût du problème MPC, on obtient :

$$\min_{\mathbf{u}_e} \left\{ \mathbf{u}_e^T \mathbf{H}_m \mathbf{u}_e + 2\mathbf{u}_e^T \mathbf{f} \begin{bmatrix} x(k|k) \\ \mathbf{w}_e \end{bmatrix} \right\},$$

tel que

$$\mathbf{1}u_{min} \leq \mathbf{u}_e \leq \mathbf{1}u_{max}.$$

Ainsi, le problème devient strictement convexe. Il peut donc être résolu aisément avec des solveurs de programmation quadratique standard.

La nouvelle matrice de pondération quadratique **H**$_m$ est une approximation de **H** et, par conséquent, la solution optimale du problème modifié peut être sous-optimale par rapport au problème original. Toutefois, la perte d'optimalité est bien moins importante que dans le cas d'une convexification par ajout d'une pondération sur les commandes.

Tel qu'il a été posé, le problème de commande à horizon glissant (MPC) qui a été obtenu au moyen du procédé selon l'invention peut être résolu aisément avec des solveurs de programmation quadratique QP standard, de manière beaucoup plus rapide qu'un problème de commande MPC avec une fonction objectif non-convexe. Cela permet d'implémenter le procédé de commande en ligne et en temps réel même sur des systèmes houlomoteurs à dynamique rapide.

Etape 6) Commande de la machine de conversion

Lors de cette étape, on commande la machine de conversion en fonction de la valeur déterminée lors de l'étape précédente. Pour cela, on actionne la machine de conversion (machine électrique ou hydraulique) pour qu'elle reproduise la nouvelle valeur de la force $u$ telle que déterminée à l'étape 5.

Par exemple, on applique au système de commande de la machine électrique la nouvelle expression de la commande de la force $u$ qui permet d'obtenir une force $u_a$ exercée par la machine de conversion sur le moyen mobile. La commande de la machine électrique pour qu'elle applique la force $u_a$ correspondante, à la dynamique de la machine près, à la commande $u$ demandée, est effectuée en modifiant le courant électrique appliqué à la machine électrique. De manière plus détaillée, pour fournir un couple ou force qui entraîne le moyen mobile, on applique un courant en fournissant une puissance électrique. En revanche, pour produire un couple ou force qui résiste au mouvement du moyen mobile, on applique un courant en récupérant une puissance électrique.

Exemple d'application

Un exemple non limitatif d'un système houlomoteur est une bouée oscillante telle que représentée sur la figure 3. Ce système houlomoteur comprend une bouée 2 en tant que moyen mobile de masse m, une machine de conversion 1 d'amortissement d et d'élasticité k qui est fixe. La bouée est soumise à un mouvement oscillatoire par les vagues 3 et aux forces hydrauliques.

On compare le procédé de commande selon l'invention au procédé de commande décrit dans la demande de brevet FR 2973448 (WO 2012/131186), en étudiant les réponses obtenues par ces deux procédés. Cet exemple comparatif a été mis en œuvre sur un système houlomoteur correspondant au schéma de la figure 3. Les figures 5 à 8 sont des courbes des valeurs obtenues par les deux procédés. Pour cet exemple, la densité spectrale de la houle considérée est conforme à la courbe de la figure 9 de l'amplitude A en fonction de la fréquence w (rad/s). Sur les courbes 5 à 8, les résultats obtenus par le procédé de commande selon l'invention sont notés INV, et les résultats obtenus par le procédé de commande décrit dans la demande de brevet FR 2973448 (WO 2012/131186) sont notés AA.

La figure 5 illustre la puissance générée Pg (Wh) en fonction du temps T (s). On remarque que la puissance générée Pg est sensiblement identique pour les deux procédés de commande.

La figure 6 illustre la puissance instantanée Pi (Wh) en fonction du temps T (s). On remarque les deux procédés de commande donnent des résultats proches en termes de puissance instantanée.

La figure 7 illustre la commande u de la machine de conversion en fonction du temps T (s). On remarque une bonne correspondance des deux commandes déterminées.

La figure 8 illustre la vitesse v du moyen mobile en fonction du temps T (s). On remarque également une bonne correspondance des vitesses déterminées.

Ainsi, le procédé selon l'invention permet une commande optimale en termes de récupération d'énergie.

De plus, le temps de calcul nécessaire pour le procédé selon l'invention est de l'ordre de la microseconde sur un calculateur de prototypage standard, alors que le temps de calcul nécessaire pour le procédé décrit dans la demande de brevet FR 2973448 (WO 2012/131186) est de l'ordre de la centaine de milli secondes pour ce même calculateur. Ainsi, le procédé de commande selon l'invention est plus favorable à une utilisation en temps réel.

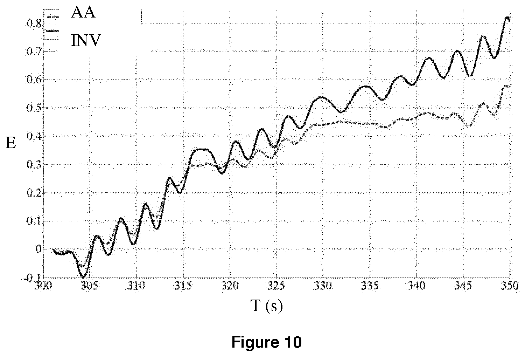

Pour le procédé de commande décrit dans la demande de brevet FR 2973448 (WO 2012/131186), on pourrait envisager de convexifier la fonction objectif par ajout d'une pénalité sur la commande. Au moyen d'un deuxième exemple comparatif, on peut également montrer que lorsqu'on essaie de convexifier la fonction objectif par discrétisation avec la méthode des rectangles, en rajoutant la plus petite pondération sur la commande qui rend le système convexe, on récupère beaucoup moins d'énergie qu'avec la convexification par discrétisation avec la méthode des trapèzes (méthode présentée ici, cas $u_a(t) = u(t)$). La figure 10 illustre l'énergie E générée par le moyen mobile en fonction du temps. La courbe INV correspond à la discrétisation avec la méthode des trapèzes qui fait apparaître une deuxième fois la commande dans la fonction objectif à chaque pas de l'horizon de prédiction selon l'invention, et la courbe AA correspond à la convexification de la fonction objectif par ajout d'une petite pondération sur la commande.

Ainsi, l'utilisation de la méthode des trapèzes pour la discrétisation, couplée à l'utilisation de pondérations sur les valeurs prédites de puissance extraite, permet d'obtenir une commande optimale en termes d'énergie générée.

## Revendications

1. Procédé de commande d'un système houlomoteur qui convertit l'énergie de la houle (3) en énergie électrique ou hydraulique, ledit système houlomoteur comportant au moins un moyen mobile (2) qui coopère avec au moins une machine de conversion (1) de l'énergie, et ledit moyen mobile (2) effectuant un mouvement oscillatoire par rapport à ladite machine de conversion (1), **caractérisé en ce qu'**on réalise les étapes suivantes :

   a) on construit un modèle dynamique dudit système houlomoteur qui relie la vitesse dudit moyen mobile (2) à ladite force exercée par la houle (3) sur ledit moyen mobile (2) et à la force exercée par ladite machine de conversion (1) sur ledit moyen mobile (2) ;
   b) on construit un modèle énergétique dudit système houlomoteur qui relie la puissance moyenne générée par ladite machine de conversion (1) à la force exercée par ladite machine de conversion (1) sur ledit moyen mobile (2), à la vitesse dudit moyen mobile (2), et au rendement dudit système houlomoteur ;
   c) on prédit la force exercée par les vagues (3) sur ledit moyen mobile (2) pour une période de temps prédéterminé ;
   d) on détermine une valeur de commande de ladite force exercé par ladite machine de conversion (1) sur ledit moyen mobile (2) maximisant la puissance moyenne généré par ladite machine de conversion (1), en mettant en œuvre les étapes suivantes :

      i) on détermine une fonction objectif représentative de la puissance générée par ladite machine de conversion (1) au moyen de ladite prédiction de la force exercée par la houle (3) sur ledit moyen mobile (2), dudit modèle dynamique et dudit modèle énergétique ;
      ii) on discrétise ladite fonction objectif par la méthode des trapèzes ;

iii) on pondère, dans ladite fonction objectif discrétisée, les valeurs futures de la commande par des coefficients de pondération prédéterminés ;

iv) on déduit ladite valeur de commande de ladite force exercée par ladite machine de conversion (1) sur ledit moyen mobile (2) par minimisation de ladite fonction objectif discrétisée et pondérée ; et

e) on commande ladite machine de conversion (1) au moyen de ladite valeur de commande.

2. Procédé selon la revendication 1, dans lequel ladite fonction objectif J discrétisée et pondérée s'écrit :

$$\mathbf{J} = \sum_{j=0}^{N_p-2} q_j u_a(k+j|k)(v(k+j|k) + v(k+j+1|k))$$

avec $q_j$ lesdits coefficients de pondération, $u_a$ la force exercée par ladite machine de conversion (1) sur ledit moyen mobile, et v la vitesse dudit moyen mobile (2), Np nombre de pas de temps discrets contenus dans l'horizon de prédiction.

3. Procédé selon la revendication 2, dans lequel ladite fonction objectif J discrétisée et pondérée s'écrit sous une forme matricielle du type :

$$\mathbf{J} = \mathbf{u}_e^T \mathbf{H} \mathbf{u}_e + 2\mathbf{u}_e^T \mathbf{f} \begin{bmatrix} x(k|k) \\ \mathbf{w}_e \end{bmatrix}$$

avec $\mathbf{u}_e$ un vecteur de la force exercée par ladite machine de conversion sur ledit moyen mobile, $x$ le vecteur d'état du modèle du système houlomoteur avec sa machine de conversion, $\mathbf{w}_e$ le vecteur des prédictions de la force de la houle, H la matrice de pondération sur le vecteur $\mathbf{u}_e$., f la matrice de pondération sur l'état courant $x$ du modèle dynamique global du système houlomoteur et le vecteur des prédictions de la force de la houle $\mathbf{w}_e$.

4. Procédé selon la revendication 3, dans lequel on remplace les valeurs propres négatives ou nulles de ladite matrice de pondération H par des valeurs propres positives prédéterminées.

5. Procédé selon l'une des revendications précédentes, dans lequel on prédit la force exercée par la houle sur ledit moyen mobile (2) par au moins une mesure ou une estimation de ladite force exercée par la houle sur ledit moyen mobile, notamment au moyen d'un ensemble de capteurs de pression disposés au niveau du moyen mobile ou de capteurs de force disposés entre ledit moyen mobile et la machine de conversion.

6. Procédé selon l'une des revendications précédentes, dans lequel ledit modèle dynamique dudit système houlomoteur s'écrit sous une forme :

$$\begin{cases} \dot{x}(t) = A_c x(t) + B_{cu} u(t) + B_{cw} w(t) \\ y(t) = C_c x(t) \end{cases}$$

avec x le vecteur d'état dudit système houlomoteur avec ladite machine de conversion, u la commande de ladite force exercée par ladite machine de conversion sur ledit moyen mobile, w la force d'excitation de la houle incidente sur ledit moyen mobile, et Ac, Bcu, Bcw, Cc des matrices qui multiplient l'état, et les entrées dudit modèle dynamique pour permettre le calcul de la variation dynamique de l'état et les sorties dudit modèle dynamique.

7. Procédé selon l'une des revendications précédentes, dans lequel ledit modèle dynamique dudit système houlomoteur intègre une dynamique idéale de ladite machine de conversion, en considérant la commande de ladite machine de conversion quasi instantanée par rapport à la dynamique dudit système houlomoteur.

8. Procédé selon l'une des revendications précédentes, dans lequel ledit modèle énergétique s'écrit par une formule du type : $P_a = -\frac{1}{T}\int_{t=0}^{T} \eta u_a v \, dt$ avec $P_a$ la puissance moyenne générée, t le temps, T une durée prédéterminée, $\eta$ le rendement de la conversion de l'énergie, u la force exercée par ladite machine de conversion sur ledit moyen mobile et v la vitesse dudit moyen mobile par rapport à ladite machine de conversion.

**9.** Procédé selon la revendication 8, dans lequel ledit rendement $\eta$ est fonction de la force $u_a$ exercée par la machine de conversion (1) sur ledit moyen mobile (2) et de la vitesse v du moyen mobile (2) par rapport à ladite machine de conversion (1).

**10.** Procédé selon la revendication 9, dans lequel ledit rendement $\eta$ est calculé par une formule du type :

$$\eta(u_a v) = \begin{cases} \eta_p \text{ si } u_a v \geq 0 \\ \eta_n \text{ si } u_a v < 0 \end{cases}$$

avec $\eta_p$ le rendement moteur de ladite machine de conversion, $\eta_n$ le rendement générateur de ladite machine de conversion, avec $0 < \eta_p \leq 1$ et $\eta_n \geq 1$.

**11.** Procédé selon l'une des revendications précédentes, dans lequel ledit procédé comprend une étape préalable d'optimisation desdits coefficients de pondération par un algorithme génétique, ou par optimisation par essaims particulaires, ou par la recherche par voisinage variable ou par la méthode de Nelder-Mead.

**12.** Procédé selon l'une des revendications précédentes, dans lequel on réitère les étapes c), d) et e) pour une commande prédictive à horizon glissant.

**13.** Procédé selon l'une des revendications précédentes, dans lequel ladite machine de conversion (1) de l'énergie est une machine électrique ou hydraulique.

**Patentansprüche**

**1.** Verfahren zur Steuerung eines Wellenenergiesystems, das die Energie des Seegangs (3) in elektrische oder hydraulische Energie umwandelt, wobei das Wellenenergiesystem mindestens eine bewegliche Einrichtung (2) aufweist, die mit mindestens einer Umwandlungsmaschine (1) der Energie zusammenwirkt, und die bewegliche Einrichtung (2) eine schwingende Bewegung bezüglich der Umwandlungsmaschine (1) ausführt, **dadurch gekennzeichnet, dass** die folgenden Schritte durchgeführt werden:

a) es wird ein dynamisches Modell des Wellenenergiesystems konstruiert, das die Geschwindigkeit der beweglichen Einrichtung (2) mit der vom Seegang (3) auf die bewegliche Einrichtung (2) ausgeübten Kraft und mit der von der Umwandlungsmaschine (1) auf die bewegliche Einrichtung (2) ausgeübten Kraft verbindet;
b) es wird ein energetisches Modell des Wellenenergiesystems konstruiert, das die von der Umwandlungsmaschine (1) erzeugte mittlere Leistung mit der von der Umwandlungsmaschine (1) auf die bewegliche Einrichtung (2) ausgeübten Kraft, mit der Geschwindigkeit der beweglichen Einrichtung (2) und mit dem Wirkungsgrad des Wellenenergiesystems verbindet;
c) die von den Wellen (3) auf die bewegliche Einrichtung (2) ausgeübte Kraft wird für einen vorbestimmten Zeitraum vorhergesagt;
d) ein Steuerwert der von der Umwandlungsmaschine (1) auf die bewegliche Einrichtung (2) ausgeübten Kraft wird bestimmt, der die von der Umwandlungsmaschine (1) erzeugte mittlere Leistung maximiert, indem die folgenden Schritte durchgeführt werden:

i) eine für die von der Umwandlungsmaschine (1) erzeugte Leistung repräsentative Zielfunktion wird mittels der Vorhersage der vom Seegang (3) auf die bewegliche Einrichtung (2) ausgeübten Kraft, des dynamischen Modells und des energetischen Modells bestimmt;
ii) die Zielfunktion wird durch die Trapezregel diskretisiert;
iii) in der diskretisierten Zielfunktion werden die zukünftigen Werte der Steuerung durch vorbestimmte Gewichtungskoeffizienten gewichtet;
iv) der Steuerwert wird von der durch die Umwandlungsmaschine (1) auf die bewegliche Einrichtung (2) ausgeübten Kraft durch Minimierung der diskretisierten und gewichteten Zielfunktion abgeleitet; und

e) die Umwandlungsmaschine (1) wird mittels des Steuerwerts gesteuert.

**2.** Verfahren nach Anspruch 1, wobei die diskretisierte und gewichtete Zielfunktion J folgendermaßen geschrieben wird:

$$J = \sum_{j=0}^{N_p-2} q_j u_a(k+j|k)\big(v(k+j|k) + v(k+j+1|k)\big)$$

mit $q_j$ den Gewichtungskoeffizienten, $u_a$ der von der Umwandlungsmaschine (1) auf die bewegliche Einrichtung ausgeübten Kraft und v der Geschwindigkeit der beweglichen Einrichtung (2), Np der Anzahl von im Vorhersagehorizont enthaltenen diskreten Zeitschritten.

3. Verfahren nach Anspruch 2, wobei die diskretisierte und gewichtete Zielfunktion J in einer Matrixform des folgenden Typs geschrieben wird:

$$J = u_e^T H u_e + 2u_e^T f \begin{bmatrix} x(k|k) \\ w_e \end{bmatrix} ,$$

mit $u_e$ einem Vektor der von der Umwandlungsmaschine auf die bewegliche Einrichtung ausgeübten Kraft, x dem Zustandsvektor des Modells des Wellenenergiesystems mit seiner Umwandlungsmaschine, $w_e$ dem Vektor der Vorhersagen der Kraft des Seegangs, H der Gewichtungsmatrix auf den Vektor $u_e$, f der Gewichtungsmatrix auf den laufenden Zustand x des globalen dynamischen Modells des Wellenenergiesystems und den Vektor der Vorhersagen der Kraft des Seegangs $w_e$.

4. Verfahren nach Anspruch 3, wobei die negativen oder Null-Eigenwerte der Gewichtungsmatrix H durch vorbestimmte positive Eigenwerte ersetzt werden.

5. Verfahren nach einem der vorhergehenden Ansprüche, wobei die vom Seegang auf die bewegliche Einrichtung (2) ausgeübte Kraft durch mindestens eine Messung oder eine Schätzung der vom Seegang auf die bewegliche Einrichtung ausgeübten Kraft vorhergesagt wird, insbesondere mittels einer Einheit von Drucksensoren, die im Bereich der beweglichen Einrichtung angeordnet sind, oder von Kraftsensoren, die zwischen der beweglichen Einrichtung und der Umwandlungsmaschine angeordnet sind.

6. Verfahren nach einem der vorhergehenden Ansprüche, wobei das dynamische Modell des Wellenenergiesystems in einer folgenden Form geschrieben wird:

$$\begin{cases} \dot{x}(t) = A_c x(t) + B_{cu} u(t) + B_{cw} w(t) \\ y(t) = C_x x(t) \end{cases}$$

mit x dem Zustandsvektor des Wellenenergiesystems mit der Umwandlungsmaschine, u der Steuerung der von der Umwandlungsmaschine auf die bewegliche Einrichtung ausgeübten Kraft, w der Erregungskraft des auf die bewegliche Einrichtung auftreffenden Seegangs, und Ac, Bcu, Bcw, Cc Matrizen, die den Zustand und die Eingänge des dynamischen Modells multiplizieren, um die Berechnung der dynamischen Veränderung des Zustands und die Ausgänge des dynamischen Modells zu erlauben.

7. Verfahren nach einem der vorhergehenden Ansprüche, wobei das dynamische Modell des Wellenenergiesystems eine ideale Dynamik der Umwandlungsmaschine umfasst, indem die Steuerung der Umwandlungsmaschine als praktisch augenblicklich bezüglich der Dynamik des Wellenenergiesystems angenommen wird.

8. Verfahren nach einem der vorhergehenden Ansprüche, wobei das energetische Modell durch eine Formel des folgenden Typs geschrieben wird: $P_a = -\frac{1}{T} \int_{t=0}^{T} \eta u_a v \, dt$, mit $P_a$ der erzeugten mittleren Leistung, t der Zeit, T einer vorbestimmten Dauer, $\eta$ dem Wirkungsgrad der Umwandlung der Energie, u der von der Umwandlungsmaschine auf die bewegliche Einrichtung ausgeübten Kraft und v der Geschwindigkeit der beweglichen Einrichtung bezüglich der Umwandlungsmaschine.

9. Verfahren nach Anspruch 8, wobei der Wirkungsgrad $\eta$ von der von der Umwandlungsmaschine (1) auf die bewegliche Einrichtung (2) ausgeübten Kraft $u_a$ und von der Geschwindigkeit v der beweglichen Einrichtung (2) bezüglich der Umwandlungsmaschine (1) abhängt.

**10.** Verfahren nach Anspruch 9, wobei der Wirkungsgrad n durch eine Formel des folgendes Typs berechnet wird:

$$\eta(ua_v) = \begin{cases} \eta_p \; wenn \; u_a v \geq 0 \\ \eta_n \; wenn \; u_a v < 0 \end{cases}$$

mit $\eta_p$ dem Antriebswirkungsgrad der Umwandlungsmaschine, $\eta_n$ dem Erzeugungswirkungsgrad der Umwandlungsmaschine, mit $0 < \eta_p \leq 1$ *und* $\eta_n \geq 1$.

**11.** Verfahren nach einem der vorhergehenden Ansprüche, wobei das Verfahren einen vorhergehenden Schritt der Optimierung der Gewichtungskoeffizienten durch einen genetischen Algorithmus oder durch Partikelschwarmoptimierung oder durch die Suche durch variable Nachbarschaft oder durch die Nelder-Mead-Methode enthält.

**12.** Verfahren nach einem der vorhergehenden Ansprüche, wobei die Schritte c), d) und e) für eine prädiktive Steuerung mit gleitendem Horizont wiederholt werden.

**13.** Verfahren nach einem der vorhergehenden Ansprüche, wobei die Umwandlungsmaschine (1) der Energie eine elektrische oder hydraulische Maschine ist.

**Claims**

**1.** Method for controlling a wave power system which converts the energy of the swell (3) into electrical or hydraulic energy, said wave power system comprising at least one movable means (2) which cooperates with at least one energy conversion machine (1), and said movable means (2) performing an oscillatory movement with respect to said conversion machine (1), **characterized in that** the following steps are carried out:

a) a dynamic model of said wave power system is constructed which links the speed of said movable means (2) to said force exerted by the swell (3) on said movable means (2) and to the force exerted by said conversion machine (1) on said movable means (2);
b) an energy model of said wave power system is constructed which links the average power generated by said conversion machine (1) to the force exerted by said conversion machine (1) on said movable means (2), to the speed of said movable means (2), and to the efficiency of said wave power system;
c) the force exerted by the waves (3) on said movable means (2) is predicted for a predetermined time period;
d) a value controlling said force exerted by said conversion machine (1) on said movable means (2) is determined that maximizes the average power generated by said conversion machine (1), by implementing the following steps:

i) an objective function is determined that is representative of the power generated by said conversion machine (1) by means of said prediction of the force exerted by the swell (3) on said movable means (2), of said dynamic model and of said energy model;
ii) said objective function is discretized by the trapezoid rule;
iii) in said discretized objective function, the future values of the control are weighted by predetermined weighting coefficients;
iv) said value controlling said force exerted by said conversion machine (1) on said movable means (2) is deduced by minimization of said discretized and weighted objective function; and

e) said conversion machine (1) is controlled by means of said controlling value.

**2.** Method according to Claim 1, wherein said discretized and weighted objective function J is written:

$$J = \sum_{j=0}^{N_p-2} q_j u_a(k+j|k)(v(k+j|k) + v(k+j+1|k))$$

with $q_i$ said weighting coefficients, $u_a$ the force exerted by said conversion machine (1) on said movable means, and v the speed of said movable means (2), Np the number of discrete time steps contained within the prediction horizon.

3. Method according to Claim 2, wherein said discretized and weighted objective function J is written in matrix form of the type:

$$\mathbf{J} = \mathbf{u}_e^T \mathbf{H} \mathbf{u}_e + 2\mathbf{u}_e^T \mathbf{f} \begin{bmatrix} x(k|k) \\ \mathbf{w}_e \end{bmatrix}$$

with $\mathbf{u}_e$ a vector of the force exerted by said conversion machine on said movable means, $x$ the state vector of the model of the wave power system with its conversion machine, $\mathbf{w}_e$ the vector of the predictions of the force of the swell, $\mathbf{H}$ the weighting matrix on the vector $\mathbf{u}_e$, f the weighting matrix on the current state x of the overall dynamic model of the wave power system and the vector of the predictions of the force of the swell $\mathbf{w}_e$.

4. Method according to Claim 3, wherein the negative or zero eigenvalues of said weighting matrix H are replaced with predetermined positive eigenvalues.

5. Method according to one of the preceding claims, wherein the force exerted by the swell on said movable means (2) is predicted by at least one measurement or one estimation of said force exerted by the swell on said movable means, notably by means of a set of pressure sensors disposed on the movable means or force sensors disposed between said movable means and the conversion machine.

6. Method according to one of the preceding claims, wherein said dynamic model of said wave power system is written in the form:

$$\begin{cases} \dot{x}(t) = A_c x(t) + B_{cu} u(t) + B_{cw} w(t) \\ y(t) = C_c x(t) \end{cases}$$

with x the state vector of said wave power system with said conversion machine, u the control of said force exerted by said conversion machine on said movable means, w the excitation force of the incident swell on said movable means, and Ac, Bcu, Bcw, Cc matrices which multiply the state, and the inputs of said dynamic model to allow the calculation of the dynamic variation of the state and the outputs of said dynamic model.

7. Method according to one of the preceding claims, wherein said dynamic model of said wave power system incorporates an ideal dynamic of said conversion machine, by considering the control of said conversion machine to be quasi-instantaneous with respect to the dynamic of said wave power system.

8. Method according to one of the preceding claims, wherein said energy model is written by a formula of the type:

$P_a = -\frac{1}{T} \int_{t=0}^{T} \eta u_a v \, dt$ with $P_a$ the average power generated, t the time, T a predetermined duration, $\eta$ the efficiency of the energy conversion, u the force exerted by said conversion machine on said movable means and v the speed of said movable means with respect to said conversion machine.

9. Method according to Claim 8, wherein said efficiency $\eta$ is a function of the force $u_a$ exerted by the conversion machine (1) on said movable means (2) and of the speed v of the movable means (2) with respect to said conversion machine.

10. Method according to Claim 9, wherein said efficiency $\eta$ is calculated by a formula of the type:

$$\eta(u_a v) = \begin{cases} \eta_p & \text{if } u_a v \geq 0 \\ \eta_n & \text{if } u_a v < 0 \end{cases}$$

with $\eta_p$ the engine output of said conversion machine, $\eta_n$ the generator output of said conversion machine, with $0 < \eta_p \leq 1$ and $\eta_n \geq 1$.

11. Method according to one of the preceding claims, wherein said method comprises a preliminary step of optimization of said weighting coefficients by a genetic algorithm, or by particle swarm optimization, or by variable neighbourhood search or by the Nelder-Mead method.

**12.** Method according to one of the preceding claims, wherein the steps c), d) and e) are reiterated for a predictive control with sliding horizon.

**13.** Method according to one of the preceding claims, wherein said energy conversion machine (1) is an electrical or hydraulic conversion machine.

Figure 1

Figure 2

Figure 3

**Figure 4a**

**Figure 4b**

**Figure 5**

**Figure 6**

Figure 7

Figure 8

Figure 9

Figure 10

## RÉFÉRENCES CITÉES DANS LA DESCRIPTION

**Documents brevets cités dans la description**

- FR 2876751
- FR 2973448
- WO 2009081042 A
- WO 2012131186 A
- FR 3019235
- WO 2015150102 A
- FR 1560260
- FR 1653109

**Littérature non-brevet citée dans la description**

- A control system for a self-reacting point absorber wave energy converter subject to constraints. **GIORGIO BACELLI ; JOHN RINGWOOD ; JEAN-CHRISTOPHE GILLOTEAUX.** Proceedings of 18th IFAC World Congress. International Fédération of Automatic Control (IFAC), 2011, 11387-11392